# EUROPEAN PATENT SPECIFICATION

(11) **EP 4 150 827 B1**
(45) Date of publication and mention of the grant of the patent: **04.11.2026**
(21) Application number: 21723477.2
(22) Date of filing: 08.04.2021
(51) Int. Cl.: H04L 5/00, H04L 5/14, H04W 72/23

(54) **BROADCASTING INTENDED TIME DIVISION DUPLEX CONFIGURATIONS**
RUNDFUNKZUSCHAUENDE ZEITDUPLEXKONFIGURATIONEN
CONFIGURATIONS DE DUPLEX À RÉPARTITION DANS LE TEMPS PRÉVUES DESTINÉES À LA DIFFUSION

(30) Priority: 12.05.2020 US 202063023513 P; 07.04.2021 US 202117224441
(43) Date of publication of application: 22.03.2023
(73) Proprietor: Qualcomm Incorporated, San Diego, CA 92121-1714 (US)
(72) Inventor: ABEDINI, Navid, San Diego, CA 92121 (US); ZHU, Xipeng, San Diego, CA 92121 (US); LUO, Tao, San Diego, CA 92121 (US); BLESSENT, Luca, San Diego, CA 92121 (US); HAMPEL, Karl, Georg, San Diego, CA 92121 (US); LUO, Jianghong, San Diego, CA 92121 (US); LI, Junyi, San Diego, CA 92121 (US)
(74) Representative: Bardehle Pagenberg Partnerschaft mbB Patentanwälte Rechtsanwälte
(86) International application number: PCT/US2021/026450
(87) International publication number: WO 2021/230999

(56) References cited:
- US-A1- 2020 145 993
- US-A1- 2020 145 994
- QUALCOMM INCORPORATED: "Qualcomm Incorporated", vol. RAN WG1, no. Taipei, Taiwan; 20190121 - 20190125, 20 January 2019 (2019-01-20), XP051593727, Retrieved from the Internet <URL:http://www.3gpp.org/ftp/Meetings%5F3GPP%5FSYNC/RAN1/Docs/R1%2D1900881%2Ezip> [retrieved on 20190120]

## Description

### FIELD OF THE DISCLOSURE

Aspects of the present disclosure generally relate to wireless communication and to techniques and apparatuses for broadcasting intended time division duplex configurations.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" (or forward link) refers to the communication link from the BS to the UE, and "uplink" (or reverse link) refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. As the demand for mobile broadband access continues to increase, further improvements in LTE, NR, and other radio access technologies remain useful.

US 2020/145994 A1 discloses an access node which may monitor for uplink and downlink resource release indications signaled by a parent access node and a child access node prior to scheduling a released resource. US 2020/145993 A1 discloses an integrated access and backhaul (IAB) node which may receive at least part of a resource pattern of a child IAB node associated with the IAB node. 3GPP document R1-1900881 discusses an IAB resource management framework.

### SUMMARY

The invention is defined by the independent claims. Optional features are set forth in the dependent claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating examples of radio access networks (RANs), in accordance with the present disclosure.
Fig. 4 is a diagram illustrating an example of an integrated access and backhaul (IAB) network architecture, in accordance with the present disclosure.
Fig. 5 is a diagram illustrating an example of resource types in an IAB network, in accordance with the present disclosure.
Fig. 6 is a diagram illustrating an example associated with broadcasting time division duplex (TDD) configurations, in accordance with the present disclosure.
Fig. 7 is a diagram illustrating an example process performed by a child node, in accordance with the present disclosure.
Fig. 8 is a diagram illustrating an example process performed by a parent node, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

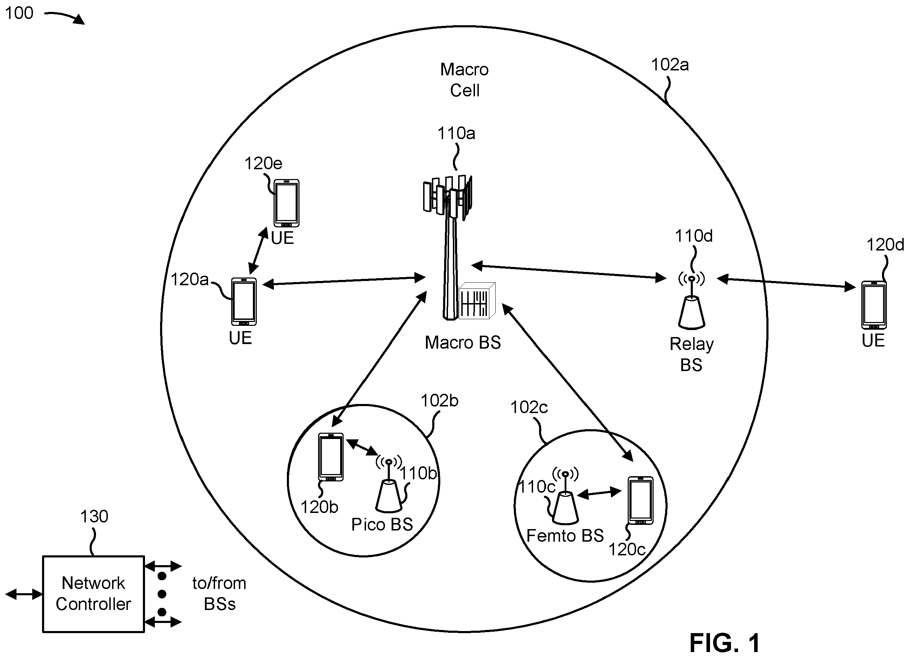

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 11od) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

As indicated above, Fig. 1 is provided as an example. Other examples may differ from what is described with regard to Fig. 1.

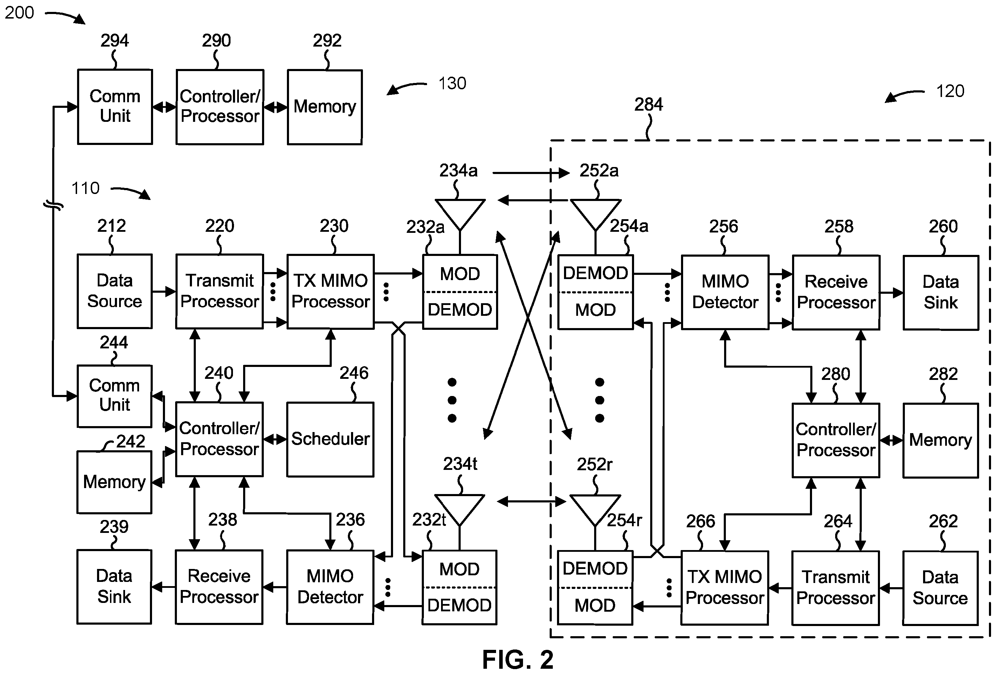

Fig. 2 is a diagram illustrating an example 200 of a base station 110 in communication with a UE 120 in a wireless network 100, in accordance with the present disclosure. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of Fig. 2.

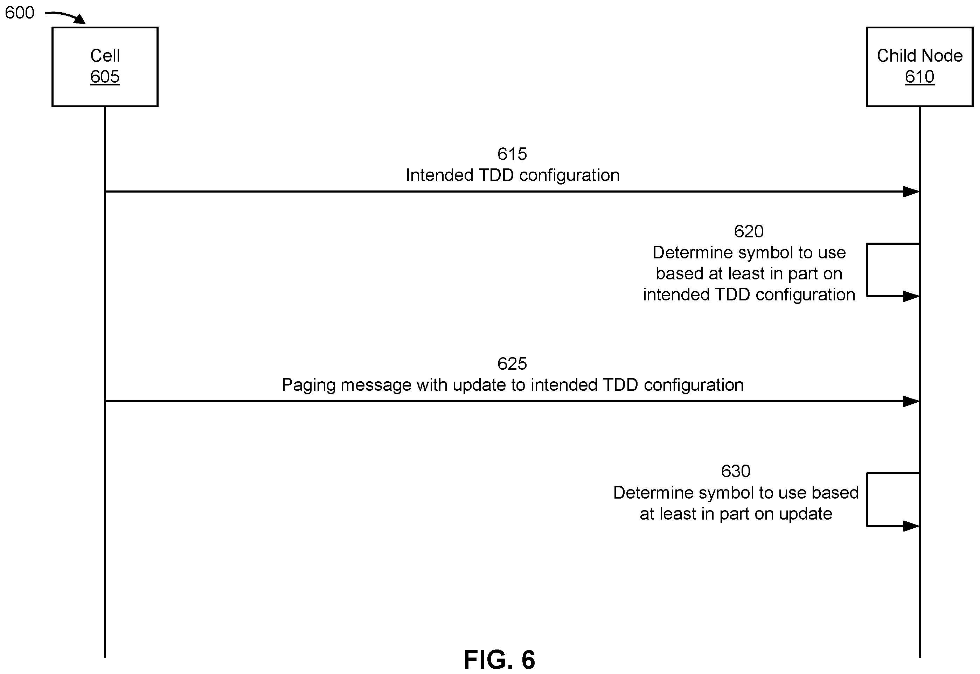

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein (for example, with reference to Figs. 6-8).

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein (for example, with reference to Figs. 6-8).

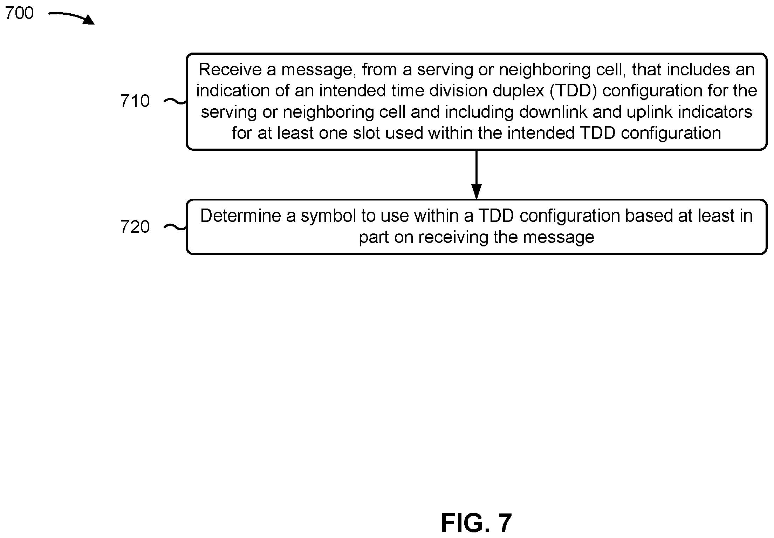

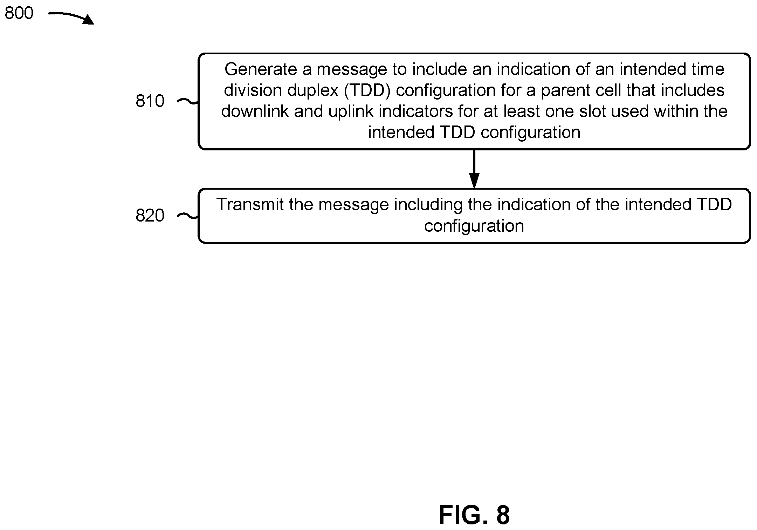

Controller/processor 240 of base station 110, controller/processor 280 of UE 120, and/or any other component(s) of Fig. 2 may perform one or more techniques associated with broadcasting intended time division duplex (TDD) configurations, as described in more detail elsewhere herein. For example, controller/processor 240 of base station 110, controller/processor 280 of UE 120, and/or any other component(s) of Fig. 2 may perform or direct operations of, for example, process 700 of Fig. 7, process 800 of Fig. 8, and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 700 of Fig. 7, process 800 of Fig. 8, and/or other processes as described herein. In some aspects, executing instructions may include running the instructions, converting the instructions, compiling the instructions, and/or interpreting the instructions, among other examples. In some aspects, a node as described herein is the base station 110, is included in the base station 110, or includes one or more components of the base station 110 shown in Fig. 2.

In some aspects, a child node (e.g., the base station 110 and/or child node 610 as described below in connection with Fig. 6) may include means for receiving a message, from a serving or neighboring cell, that includes an indication of an intended TDD configuration for the serving or neighboring cell, wherein the indication includes downlink and uplink indicators for at least one slot used within the intended TDD configuration; and/or means for determining a symbol to use within a TDD configuration for the child node, based at least in part on receiving the message. In some aspects, the means for the child node to perform operations described herein may include, for example, one or more of antenna 234, DEMOD 232, MIMO detector 236, receive processor 238, controller/processor 240, transmit processor 220, TX MIMO processor 230, MOD 232, antenna 234, memory 242, or scheduler 246.

In some aspects, the child node may further include means for receiving a paging message indicating a change to the intended TDD configuration; and means for determining the symbol to use based at least in part on receiving the paging message.

In some aspects, a parent node (e.g., the base station 110 and/or a parent node serving cell 605 as described below in connection with Fig. 6) may include means for generating a message to include an indication of an intended TDD configuration for the parent node, wherein the indication includes downlink and uplink indicators for at least one slot used within the intended TDD configuration; and/or means for transmitting the message including the indication of the intended TDD configuration for the parent node. In some aspects, such means may include one or more components of base station 110 described in connection with Fig. 2, such as antenna 234, DEMOD 232, MIMO detector 236, receive processor 238, controller/processor 240, transmit processor 220, TX MIMO processor 230, MOD 232, memory 242, or scheduler 246.

In some aspects, the parent node may further include means for broadcasting the message as a system information block (SIB) message; and/or means for sending the message as downlink control information (DCI).

In some aspects, the parent node may further include means for generating a paging message indicating a change to the intended TDD configuration; and means for transmitting the paging message indicating the change to the intended TDD configuration.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

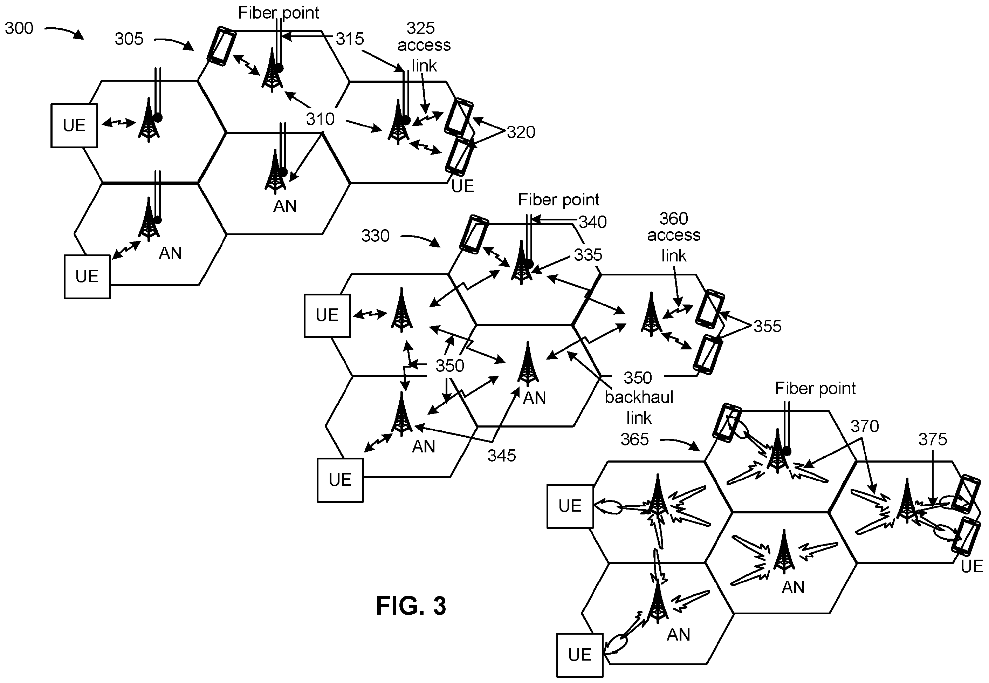

Fig. 3 is a diagram illustrating examples 300 of radio access networks, in accordance with the present disclosure. As shown by reference number 305, a traditional (e.g., 3G, 4G, or LTE) radio access network may include multiple base stations 310 (e.g., access nodes (AN)), where each base station 310 communicates with a core network via a wired backhaul link 315, such as a fiber connection. A base station 310 may communicate with a UE 320 via an access link 325, which may be a wireless link. In some aspects, a base station 310 shown in Fig. 3 may be a base station 110 shown in Fig. 1. In some aspects, a UE 320 shown in Fig. 3 may be a UE 120 shown in Fig. 1.

As shown by reference number 330, a radio access network may include a wireless backhaul network, sometimes referred to as an integrated access and backhaul (IAB) network. In an IAB network, at least one base station is an anchor base station 335 that communicates with a core network via a wired backhaul link 340, such as a fiber connection. An anchor base station 335 may also be referred to as an IAB donor (or IAB-donor). The IAB network may include one or more non-anchor base stations 345, sometimes referred to as relay base stations or IAB nodes (or IAB-nodes). The non-anchor base station 345 may communicate directly or indirectly with the anchor base station 335 via one or more backhaul links 350 (e.g., via one or more non-anchor base stations 345) to form a backhaul path to the core network for carrying backhaul traffic. Backhaul link 350 may be a wireless link. Anchor base station(s) 335 and/or non anchor base station(s) 345 may communicate with one or more UEs 355 via access links 360, which may be wireless links for carrying access traffic. In some aspects, an anchor base station 335 and/or a non-anchor base station 345 shown in Fig. 3 may be a base station 110 shown in Fig. 1. In some aspects, a UE 355 shown in Fig. 3 may be a UE 120 shown in Fig. 1.

As shown by reference number 365, in some aspects, a radio access network that includes an IAB network may utilize millimeter wave technology and/or directional communications (e.g., beamforming) for communications between base stations and/or UEs (e.g., between two base stations, between two UEs, and/or between a base station and a UE). For example, wireless backhaul links 370 between base stations may use millimeter wave signals to carry information and/or may be directed toward a target base station using beamforming. Similarly, the wireless access links 375 between a UE and a base station may use millimeter wave signals and/or may be directed toward a target wireless node (e.g., a UE and/or a base station). In this way, inter-link interference may be reduced.

The configuration of base stations and UEs in Fig. 3 is shown as an example, and other examples are contemplated. For example, one or more base stations illustrated in Fig. 3 may be replaced by one or more UEs that communicate via a UE-to-UE access network (e.g., a peer-to-peer network or a device-to-device network). In this case, "anchor node" may refer to a UE that is directly in communication with a base station (e.g., an anchor base station or a non-anchor base station).

As indicated above, Fig. 3 is provided as an example. Other examples may differ from what is described with regard to Fig. 3.

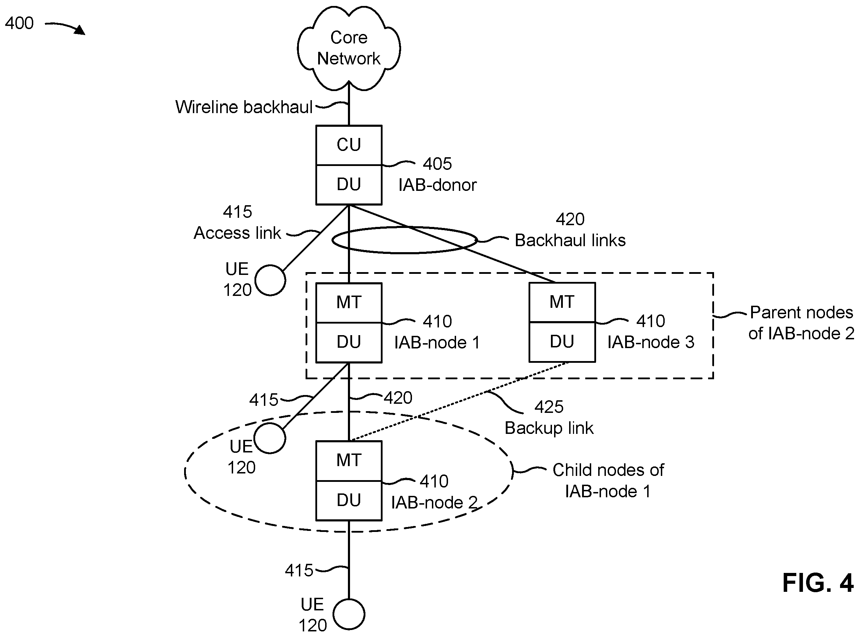

Fig. 4 is a diagram illustrating an example 400 of an IAB network architecture, in accordance with the present disclosure. As shown in Fig. 4, an IAB network may include an IAB donor 405 (shown as IAB-donor) that connects to a core network via a wired connection (shown as a wireline backhaul). For example, an Ng interface of an IAB donor 405 may terminate at a core network. Additionally, or alternatively, an IAB donor 405 may connect to one or more devices of the core network that provide a core access and mobility management function (AMF). In some aspects, an IAB donor 405 may include a base station 110, such as an anchor base station, as described above in connection with 3. As shown, an IAB donor 405 may include a central unit (CU), which may perform access node controller (ANC) functions and/or AMF functions. The CU may configure a distributed unit (DU) of the IAB donor 405 and/or may configure one or more IAB nodes 410 (e.g., a mobile termination (MT) unit and/or a DU of an IAB node 410) that connect to the core network via the IAB donor 405. Thus, a CU of an IAB donor 405 may control and/or configure the entire IAB network that connects to the core network via the IAB donor 405, such as by using control messages and/or configuration messages (e.g., a radio resource control (RRC) configuration message or an F1 application protocol (F1-AP) message).

As further shown in Fig. 4, the IAB network may include IAB nodes 410 (shown as IAB-node 1, IAB-node 2, and IAB-node 3) that connect to the core network via the IAB donor 405. As shown, an IAB node 410 may include MT functions (also sometimes referred to as UE functions (UEF)) and may include DU functions (also sometimes referred to as access node functions (ANF)). The MT functions of an IAB node 410 (e.g., a child node) may be controlled and/or scheduled by another IAB node 410 (e.g., a parent node of the child node) and/or by an IAB donor 405. The DU functions of an IAB node 410 (e.g., a parent node) may control and/or schedule other IAB nodes 410 (e.g., child nodes of the parent node) and/or UEs 120. Thus, a DU may be referred to as a scheduling node or a scheduling component, and an MT unit may be referred to as a scheduled node or a scheduled component. In some aspects, an IAB donor 405 may include DU functions and not MT functions. That is, an IAB donor 405 may configure, control, and/or schedule communications of IAB nodes 410 and/or UEs 120. A UE 120 may include only MT functions, and not DU functions. That is, communications of a UE 120 may be controlled and/or scheduled by an IAB donor 405 and/or an IAB node 410 (e.g., a parent node of the UE 120).

When a first node controls and/or schedules communications for a second node (e.g., when the first node provides DU functions for the second node's MT functions), the first node may be referred to as a parent node of the second node, and the second node may be referred to as a child node of the first node. A child node of the second node may be referred to as a grandchild node of the first node. Thus, a DU function of a parent node may control and/or schedule communications for child nodes of the parent node. A parent node may be an IAB donor 405 or an IAB node 410, and a child node may be an IAB node 410 or a UE 120. Communications of an MT function of a child node may be controlled and/or scheduled by a parent node of the child node.

As further shown in Fig. 4, a link between a UE 120 (e.g., which only has MT functions, and not DU functions) and an IAB donor 405, or between a UE 120 and an IAB node 410, may be referred to as an access link 415. Access link 415 may be a wireless access link that provides a UE 120 with radio access to a core network via an IAB donor 405, and optionally via one or more IAB nodes 410. Thus, the network illustrated in 4 may be referred to as a multi-hop network or a wireless multi-hop network.

As further shown in Fig. 4, a link between an IAB donor 405 and an IAB node 410 or between two IAB nodes 410 may be referred to as a backhaul link 420. Backhaul link 420 may be a wireless backhaul link that provides an IAB node 410 with radio access to a core network via an IAB donor 405, and optionally via one or more other IAB nodes 410. In an IAB network, network resources for wireless communications (e.g., time resources, frequency resources, and/or spatial resources) may be shared between access links 415 and backhaul links 420. In some aspects, a backhaul link 420 may be a primary backhaul link or a secondary backhaul link (e.g., a backup backhaul link). In some aspects, a secondary backhaul link may be used if a primary backhaul link fails, becomes congested, and/or becomes overloaded, among other examples. For example, a backup link 425 between IAB-node 2 and IAB-node 3 may be used for backhaul communications if a primary backhaul link between IAB-node 2 and IAB-node 1 fails. As used herein, "node" or "wireless node" may refer to an IAB donor 405 or an IAB node 410.

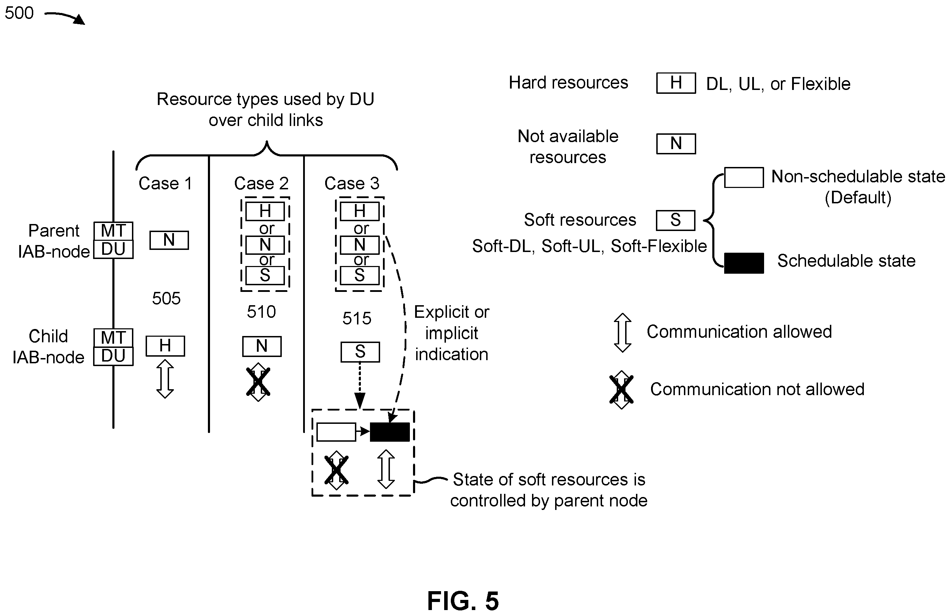

In an IAB network, parent nodes may inform child nodes about TDD configurations used within cells served by parent nodes. The child nodes may use the TDD configurations to manage interference, such as by selecting symbols for uplink and/or downlink that are not used by other child nodes and/or by using flexible symbols (e.g., as described below in connection with Fig. 5) for uplink and/or downlink based at least in part on how other child nodes are using the flexible symbols. However, if a parent DU seeks information about a TDD configuration used by a different parent DU (e.g., serving one or more cells that neighbor one or more cells served by the parent DU), such information is generally transmitted through one or more parent CUs of the parent DUs. For example, any information from a first parent DU to a second parent DU is transmitted to a parent CU of the first parent DU and then exchanged between the parent CU of the first parent DU and a parent CU of the second parent DU before being transmitted to the second parent DU. Additional transmissions are involved if a child DU or child MT is exchanging information with a parent DU of another cell or with a child DU or child MT of a different parent DU. These exchanges are slow and consume significant processing resources and network resources. Accordingly, both computing and network resources are expended to transfer information between parent DUs.

Techniques and apparatuses described herein allow parent DUs to broadcast TDD configurations to other DUs and/or MTs that are not children of the broadcasting DUs. Accordingly, DUs and/or MTs may adjust the TDD configurations used by the DUs and/or MTs, respectively, based at least in part on TDD configurations that are broadcast. These broadcasts are faster and consume fewer processing and network resources as compared with exchanging information through CUs, as described above. As a result, techniques and apparatuses described herein conserve computing resources and network resources when TDD configurations are exchanged (e.g., in order to manage interference).

As indicated above, Fig. 4 is provided as an example. Other examples may differ from what is described with regard to Fig. 4.

Fig. 5 is a diagram illustrating an example 500 of resource types in an IAB network, in accordance with the present disclosure. In an IAB network, time domain resources (sometimes referred to as time resources) may be configured as downlink-only, uplink-only, flexible, or not available (e.g., unavailable). When a time resource is configured as downlink-only for a wireless node, that time resource may be available for only downlink communications of the wireless node, and not uplink communications. Similarly, when a time resource is configured as uplink-only for a wireless node, that time resource may be available for only uplink communications of the wireless node, and not downlink communications. When a time resource is configured as flexible for a wireless node, that time resource may be available for both downlink communications and uplink communications of the wireless node. When a time resource is configured as not available for a wireless node, that time resource may not be used for any communications of the wireless node.

Examples of downlink communications include synchronization signal blocks (SSBs), channel state information reference signals (CSI-RS), physical downlink control channel (PDCCH) communications, and/or physical downlink shared channel (PDSCH) communications. Examples of uplink communications include physical random access channel (PRACH) communications, physical uplink control channel (PUCCH) communications, physical uplink shared channel (PUSCH) communications, and/or sounding reference signals (SRSs).

Time resources in an IAB network that are configured as downlink-only, uplink-only, or flexible may be further configured as hard resources or soft resources. When a time resource is configured as a hard resource for a wireless node, that time resource is always available for communications of the wireless node. For example, a hard downlink-only time resource is always available for only downlink communications of the wireless node, a hard uplink-only time resource is always available for only uplink communications of the wireless node, and a hard flexible time resource is always available for uplink and downlink communications of the wireless node.

When a time resource is configured as a soft resource for a wireless node, the availability of that time resource is controlled by a parent node of the wireless node. For example, the parent node may indicate (e.g., explicitly or implicitly) whether a soft time resource is available for communications of the wireless node. Thus, a soft time resource may be in one of two states: a schedulable state (e.g., when the soft time resource is available for scheduling and/or communications of the wireless node) and a non-schedulable state (e.g., when the soft time resource is not available for scheduling and is not available for communications of the wireless node).

For example, a soft downlink-only time resource is only available for downlink communications of the wireless node when a parent node of the wireless node indicates that the soft downlink-only time resource is available. Similarly, a soft uplink-only time resource is only available for uplink communications of the wireless node when a parent node of the wireless node indicates that the soft uplink-only time resource is available. A soft flexible time resource is only available for uplink and downlink communications of the wireless node when a parent node of the wireless node indicates that the soft flexible time resource is available.

As an example, and as shown by reference number 505, a time resource may be configured as hard for a child node, and may be configured as not available for a parent node of the child node. In this case, the parent node cannot communicate using that time resource, but the child node can schedule communications in that time resource and/or communicate using that time resource. This configuration may reduce interference between the parent node and the child node and/or may reduce scheduling conflicts between the parent node and the child node.

As another example, and as shown by reference number 510, a time resource may be configured as not available for the child node, and may be configured as hard, soft, or not available for the parent node (e.g., depending on a network configuration, network conditions, and/or a configuration of a parent node of the parent node). In this case, the child node cannot schedule communications in that time resource and cannot communicate using that time resource.

As another example, and as shown by reference number 515, a time resource may be configured as soft for the child node, and may be configured as hard, soft, or not available for the parent node (e.g., depending on a network configuration, network conditions, and/or a configuration of a parent node of the parent node). In this case, the child node cannot schedule or communicate using the time resource unless the child node receives an indication (e.g., a release indication), from the parent node (e.g., explicitly or implicitly), that the time resource is available (i.e., released) for use by the child node. If the child node receives such an indication, then the child node can schedule communications in that time resource and/or communicate using that time resource.

In an IAB network, parent nodes may periodically broadcast an SIB in a SIB Type 1 (SIB1) message. Child nodes may receive these SIB1 messages, both from the parent nodes for those child nodes as well as from neighboring cells served by other parent nodes. The SIB1 messages may include basic TDD information, such as a *TDD-UL-DL-ConfigCommon* data structure as defined in 3GPP specifications and/or another standard. This basic TDD information may define a periodic pattern of downlink and uplink slots for reception and transmission. However, this basic TDD information often lacks downlink and uplink indicators for at least one slot used within the intended TDD configuration. Additionally, this basic TDD information included in SIB1 messages often lacks indicators of availability of symbols within slots (e.g., as described above). As used herein, "slot" may refer to a portion of a subframe, which in turn may be a fraction of a radio frame within an LTE, 5G, or other wireless communication structure. In some aspects, a slot may include one or more symbols. Additionally, "symbol" may refer to an OFDM symbol or another similar symbol within a slot.

In addition, some slot formats, which may be used by the nodes, are not compatible with intended TDD configuration signaling using a cross-link interference (CLI) framework. For example, a format of an intended TDD configuration message may not allow an indication of slot formats that includes:
[*N₁* UL symbols, *N₂* flexible (F) symbols, *N₃* DL symbols],
where *N₁, N₂,* and *N₃* are positive integers and where *N₁, N₂,* and *N₂* are quantities of symbols in an ordered set of symbols. In other words, an intended TDD configuration message may not enable indication of a slot format that includes a first quantity of uplink symbols, followed by a second quantity of flexible symbols, followed by a third quantity of downlink symbols.

Moreover, some other types of slot formats may not be supported in an intended TDD configuration message, such as when *N₁* > 0, *N₂* = 0, and *N₃ >* 0; when *N₁ >* 0*, N₂* > 0, and *N₃* = 0; when *N₁* = 0, *N₂* > 0, and *N₃ >* 0; and so on. Some slot formats that cannot be indicated using an intended TDD configuration message may be indicated using a TDD dedicated configuration message or a slot format indicator (SFI). However, using an SFI or a TDD dedicated configuration message does not allow for dynamic configuration to reduce CLI.

Techniques and apparatuses described herein define a broadcast of more detailed TDD information from parent nodes for reception by child nodes of neighboring cells. For example, techniques and apparatuses described herein may use *a TDD-UL-DL-ConfigDedicated* data structure as defined in 3GPP specifications and/or another standard. Additionally, or alternatively, techniques and apparatuses described herein may include, in the broadcast, indicators of availability of symbols within at least one slot used within the intended TDD configuration. As a result, the nodes may manage interference more effectively, which increases quality and/or reliability of communications, increases throughput, and/or reduces latency. Additionally, the broadcasts described herein are faster and consume fewer processing and network resources as compared with exchanging information through CUs.

As indicated above, Fig. 5 is provided as an example. Other examples are possible and may differ from what was described with regard to Fig. 5.

Fig. 6 is a diagram illustrating an example 600 of broadcasting intended TDD configurations, in accordance with the present disclosure. As shown in Fig. 6, a cell 605 (e.g., served by a DU in an IAB network, such as a DU of IAB node 410 of Fig. 4, and/or another network node) may communicate with a child node 610 (e.g., a DU in an IAB network, such as a DU of IAB node 410 of Fig. 4; an MT in an IAB network, such as an MT of IAB node 410 of Fig. 4; and/or another child node). The cell 605 may be a cell neighboring a cell served by the child node 610. Additionally, or alternatively, the cell 605 may be a serving cell of child node 610 (e.g., served by a parent DU of a child DU in an IAB network, such as a DU of IAB node 410 of Fig. 4, and/or another network node).

The cell 605 may generate a message to include an indication of an intended TDD configuration for a parent node of the cell 605. In some aspects, the indication may include downlink and uplink indicators for at least one slot used within the intended TDD configuration. For example, the indication may be a *TDD-UL-DL-ConfigDedicated* data structure as defined in 3GPP specifications and/or another standard. Although the description below will focus on at least one slot used within the intended TDD configuration, the description similarly applies to any quantity of slots used within the intended TDD configuration (e.g., by providing an index within the data structure to link different downlink and uplink indicators to different slots).

In some aspects, the indication may include, for the at least one slot used within the intended TDD configuration, information indicating a quantity of downlink symbols and a quantity of uplink symbols. For example, the indication may comprise a first integer (e.g., from 0 to 13 or another range) indicating a quantity of downlink symbols at the beginning of the at least one slot and a second integer (e.g., from 0 to 13 or another range) indicating a quantity of uplink symbols at the end of the at least one slot. As an alternative, the first integer may indicate a quantity of downlink symbols at the end of the at least one slot, and the second integer may indicate a quantity of uplink symbols at the beginning of the at least one slot.

Additionally, or alternatively, the indication may include, for the at least one slot used within the intended TDD configuration, an implicit indicator of a quantity of flexible symbols. In some aspects, the at least one slot may include flexible symbols if the quantity of uplink symbols and the quantity of downlink symbols sum to a total less than a quantity of symbols in the at least one slot. For example, if the quantity of uplink symbols and the quantity of downlink symbols sum to a total less than 14 or other quantity of symbols in the at least one slot, the indication may implicitly indicate that the remaining quantity of symbols in the at least one slot are flexible. As an alternative, the indication may include an explicit indicator of a quantity of flexible symbols, such as an integer indicating a quantity of flexible symbols in the middle of the at least one slot (e.g., between uplink and downlink symbols).

Additionally, or alternatively, the indication may include, for the at least one slot used within the intended TDD configuration, an indicator of a permutation of the downlink and uplink indicators. For example, the indicator may include a bit, a Boolean, or other data type that determines whether downlink symbols precede uplink symbols in the at least one slot or whether uplink symbols precede downlink symbols in the at least one slot. In some aspects, one option (e.g., downlink symbols preceding uplink symbols) may serve as a default, and the indicator may be present only when the other option (e.g., uplink symbols preceding downlink symbols) is used within the at least one slot.

Additionally, or alternatively, the indication may include, for the at least one slot used within the intended TDD configuration, indicators of availability of symbols within the at least one slot. For example, the indicators may include bits, Booleans, or other data types that indicate whether a symbol within the at least one slot is available or unavailable to the cell 605. In some aspects, the indicators may further indicate whether the symbol is hard or soft, as described above in connection with Fig. 5. In some aspects, all uplink symbols in the at least one slot may share the same availability, all downlink symbols in the at least one slot may share the same availability, and/or all flexible symbols in the at least one slot may share the same availability.

As shown by reference number 615, the cell 605 may transmit the message including the indication of the intended TDD configuration for the parent node. In some aspects, the message may be included in a SIB message. For example, the cell 605 may broadcast the SIB message on an on-demand basis.

Additionally, or alternatively, the message may be included in DCI. In some aspects, the DCI may be a group-common DCI sent to a set of wireless devices including the child node 610. Additionally, in some aspects, the group-common DCI may indicate an SFI corresponding to the intended TDD configuration. The DCI may be broadcast by the cell 605 and/or may be directed to one or more MT nodes (e.g., the child node 610).

As further shown by reference number 615, the child node 610 may receive the message, from the cell 605, that includes the indication of the intended TDD configuration for the cell 605 (whether a neighboring cell or a serving cell). The indication may include downlink and uplink indicators for at least one slot used within the intended TDD configuration, as described above.

As shown by reference number 620, the child node 610 may determine a symbol to use, within a TDD configuration for the child node 610, based at least in part on receiving the message. For example, the child node 610 may determine the symbol based at least in part on managing interference between a TDD configuration for the child node 610 and the intended TDD configuration for the cell 605. As described above, managing interference may include selecting symbols for uplink and/or downlink that are not used by other child nodes as indicated in the intended TDD configuration and/or using flexible symbols for uplink and/or downlink based at least in part on how other child nodes are using the flexible symbols as indicated in the intended TDD configuration.

As described above, the cell 605 may comprise a serving cell of the child node 610. Accordingly, the cell 605 may additionally or alternatively transmit, to the child node 610, at least one of a cell-specific TDD configuration, a dedicated TDD configuration, an SFI, or a combination thereof. For example, the cell 605 may comprise a parent DU of the child node 610 that provides the cell-specific TDD configuration, the dedicated TDD configuration, the SFI, or a combination thereof for use by the child node 610. In some aspects, the child node 610 may determine the symbol to use based at least in part on the at least one of a cell-specific TDD configuration, a dedicated TDD configuration, an SFI, or a combination thereof. For example, the child node 610 may manage interference between the intended TDD configuration and the cell-specific TDD configuration, the dedicated TDD configuration, the SFI, or a combination thereof.

In some aspects, the cell 605 may modify the intended TDD configuration. For example, the cell 605 may modify a number of uplink and/or downlink symbols within the at least one slot, change a flexible symbol within the at least one slot to an uplink or downlink symbol, and/or modify an availability of a symbol within the at least one slot. Accordingly, the cell 605 may generate a paging message indicating a change to the intended TDD configuration.

As shown by reference number 625, the cell 605 may transmit the paging message indicating the change to the intended TDD configuration. For example, the cell 605 may broadcast the paging message on an on-demand basis and/or direct the paging message to one or more MT nodes, as described above.

As further shown by reference number 625, the child node 610 may receive the paging message indicating the change to the intended TDD configuration. For example, the child node 610 may decode the paging message when broadcast and/or request the paging message from the cell 605.

As shown by reference number 630, the child node 610 may redetermine the symbol to use based at least in part on receiving the paging message. For example, as described above, the child node 610 may determine the symbol based at least in part on managing interference between the TDD configuration for the child node 610 and the intended TDD configuration for the cell 605 with the change indicated in the paging message. As described above, managing interference may include selecting symbols for uplink and/or downlink that are not used by other child nodes as indicated in the intended TDD configuration and/or using flexible symbols for uplink and/or downlink based at least in part on how other child nodes are using the flexible symbols as indicated in the intended TDD configuration.

As indicated above, Fig. 6 is provided as an example. Other examples are possible and may differ from what was described with regard to Fig. 6.

Fig. 7 is a diagram illustrating an example process 700 performed, for example, by a child node, in accordance with the present disclosure. Example process 700 is an example where the child node (e.g., child node 610 of Fig. 6) performs operations associated with broadcasting intended TDD configurations.

As shown in Fig. 7, in some aspects, process 700 may include receiving a message, from a serving or neighboring cell (e.g., cell 605 of Fig. 6), that includes an indication of an intended TDD configuration for the serving or neighboring cell (block 710). For example, the child node (e.g., using antenna 234, demodulator 232, MIMO detector 236, receive processor 238, controller/processor 240, memory 242, and/or scheduler 246) may receive the message, from the serving or neighboring cell, that includes the indication of the intended TDD configuration for the serving or neighboring cell, as described above. In some aspects, the indication includes downlink and uplink indicators for at least one slot used within the intended TDD configuration.

As further shown in Fig. 7, in some aspects, process 700 may include determining a symbol to use within a TDD configuration for the child node, based at least in part on receiving the message (block 720). For example, the child node (e.g., using transmit processor 220, TX MIMO processor 230, MIMO detector 236, receive processor 238, controller/processor 240, memory 242, and/or scheduler 246) may determine a symbol to use within a TDD configuration for the child node, based at least in part on receiving the message, as described above.

Process 700 may include additional aspects, such as any single aspect or any combination of aspects described below and/or in connection with one or more other processes described elsewhere herein.

In a first aspect, determining the symbol is based at least in part on managing interference between the TDD configuration for the child node and the intended TDD configuration for the serving or neighboring cell.

In a second aspect, alone or in combination with the first aspect, the indication includes, for the at least one slot used within the intended TDD configuration, information indicating a quantity of downlink symbols and a quantity of uplink symbols.

In a third aspect, alone or in combination with one or more of the first and second aspects, the indication includes, for the at least one slot used within the intended TDD configuration, an implicit indicator of a quantity of flexible symbols.

In a fourth aspect, alone or in combination with one or more of the first through third aspects, the indication includes, for the at least one slot used within the intended TDD configuration, an indicator of a permutation of the downlink and uplink indicators.

In a fifth aspect, alone or in combination with one or more of the first through fourth aspects, the indication includes, for the at least one slot used within the intended TDD configuration, indicators of availability of symbols within the at least one slot.

In a sixth aspect, alone or in combination with one or more of the first through fifth aspects, the message is included in a SIB.

In a seventh aspect, alone or in combination with one or more of the first through sixth aspects, the message is included in DCI.

In an eighth aspect, alone or in combination with one or more of the first through seventh aspects, the DCI is a group-common DCI sent to a set of wireless devices including the child node.

In a ninth aspect, alone or in combination with one or more of the first through eighth aspects, the group-common DCI indicates an SFI corresponding to the intended TDD configuration.

In a tenth aspect, alone or in combination with one or more of the first through ninth aspects, process 700 further includes receiving (e.g., using antenna 234, demodulator 232, MIMO detector 236, receive processor 238, controller/processor 240, memory 242, and/or scheduler 246) a paging message indicating a change to the intended TDD configuration; and determining (e.g., using transmit processor 220, TX MIMO processor 230, MIMO detector 236, receive processor 238, controller/processor 240, memory 242, and/or scheduler 246) the symbol to use based at least in part on receiving the paging message.

In an eleventh aspect, alone or in combination with one or more of the first through tenth aspects, the message is received from a DU in an IAB network.

In a twelfth aspect, alone or in combination with one or more of the first through eleventh aspects, the serving or neighboring cell comprises a serving cell of the child node, and the intended TDD configuration includes at least one of a cell-specific TDD configuration, a dedicated TDD configuration, an SFI, or a combination thereof.

In a thirteenth aspect, alone or in combination with one or more of the first through twelfth aspects, the symbol to use is determined based at least in part on the at least one of a cell-specific TDD configuration, a dedicated TDD configuration, an SFI, or a combination thereof.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a diagram illustrating an example process 800 performed, for example, by a parent node, in accordance with the present disclosure. Example process 800 is an example where a parent node (e.g., a parent node serving cell 605 of Fig. 6) performs operations associated with broadcasting intended TDD configurations.

As shown in Fig. 8, in some aspects, process 800 may include generating a message to include an indication of an intended TDD configuration for the parent node (block 810). For example, the parent node (e.g., using transmit processor 220, TX MIMO processor 230, modulator 232, controller/processor 240, memory 242, and/or scheduler 246) may generate the message to include the indication of the intended TDD configuration for the parent node, as described above. In some aspects, the indication includes downlink and uplink indicators for at least one slot used within the intended TDD configuration.

As further shown in Fig. 8, in some aspects, process 800 may include transmitting the message including the indication of the intended TDD configuration for the parent node (block 820). For example, the parent node (e.g., using transmit processor 220, TX MIMO processor 230, modulator 232, antenna 234, controller/processor 240, memory 242, and/or scheduler 246) may transmit the message including the indication of the intended TDD configuration for the parent node, as described above.

Process 800 may include additional aspects, such as any single aspect or any combination of aspects described below and/or in connection with one or more other processes described elsewhere herein.

In a first aspect, the indication includes, for the at least one slot used within the intended TDD configuration, information indicating a quantity of downlink symbols and a quantity of uplink symbols.

In a second aspect, alone or in combination with the first aspect, the indication includes, for the at least one slot used within the intended TDD configuration, an implicit indicator of a quantity of flexible symbols.

In a third aspect, alone or in combination with one or more of the first and second aspects, the indication includes, for the at least one slot used within the intended TDD configuration, an indicator of a permutation of the downlink and uplink indicators.

In a fourth aspect, alone or in combination with one or more of the first through third aspects, the indication includes, for the at least one slot used within the intended TDD configuration, indicators of availability of symbols within the at least one slot.

In a fifth aspect, alone or in combination with one or more of the first through fourth aspects, transmitting the message includes broadcasting the message as a SIB message.

In a sixth aspect, alone or in combination with one or more of the first through fifth aspects, the SIB message is broadcast on an on-demand basis.

In a seventh aspect, alone or in combination with one or more of the first through sixth aspects, transmitting the message includes sending the message as DCI.

In an eighth aspect, alone or in combination with one or more of the first through seventh aspects, the DCI is a group-common DCI sent to a set of wireless devices including a child node.

In a ninth aspect, alone or in combination with one or more of the first through eighth aspects, the group-common DCI indicates an SFI corresponding to the intended TDD configuration.

In a tenth aspect, alone or in combination with one or more of the first through ninth aspects, the DCI is directed to one or more MT nodes.

In an eleventh aspect, alone or in combination with one or more of the first through tenth aspects, process 800 further includes generating a paging message (e.g., using transmit processor 220, TX MIMO processor 230, modulator 232, controller/processor 240, memory 242, and/or scheduler 246) indicating a change to the intended TDD configuration; and transmitting (e.g., using transmit processor 220, TX MIMO processor 230, modulator 232, antenna 234, controller/processor 240, memory 242, and/or scheduler 246) the paging message indicating the change to the intended TDD configuration.

In a twelfth aspect, alone or in combination with one or more of the first through eleventh aspects, the paging message is broadcast on an on-demand basis or directed to one or more MT nodes.

In a thirteenth aspect, alone or in combination with one or more of the first through twelfth aspects, the parent node is at least part of a serving cell, and the intended TDD configuration includes at least one of a cell-specific TDD configuration, a dedicated TDD configuration, an SFI, or a combination thereof.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

The foregoing disclosure provides illustration and description, but is not intended to be exhaustive or to limit the aspects to the precise forms disclosed. Modifications and variations may be made in light of the above disclosure or may be acquired from practice of the aspects, within the scope of the appended claims.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A child node (610) for wireless communication, comprising:
a memory; and one or more processors coupled to the memory, the memory and the one or more processors configured to:
receive a message, from a serving or neighboring cell, that includes an indication of an intended time division duplex, TDD, configuration for the serving or neighboring cell, wherein the indication includes, for at least one slot used within the intended TDD configuration, downlink and uplink indicators of availability of symbols within the at least one slot; and
determine a symbol to use within a TDD configuration for the child node, based at least in part on receiving the message.

2. The child node of claim 1, wherein determining the symbol is based at least in part on managing interference between the TDD configuration for the child node and the intended TDD configuration for the serving or neighboring cell; or
the child node of claim 1, wherein the indication includes, for the at least one slot used within the intended TDD configuration, information indicating a quantity of downlink symbols and a quantity of uplink symbols; or
the child node of claim 1, wherein the indication includes, for the at least one slot used within the intended TDD configuration, an implicit indicator of a quantity of flexible symbols.

3. The child node of claim 1, wherein the message is included in a system information block, SIB; or
the child node of claim 1, wherein the message is included in downlink control information, DCI;
wherein the DCI is a group-common DCI sent to a set of wireless devices including the child node; and
wherein the group-common DCI indicates a slot format indication, SFI, corresponding to the intended TDD configuration.

4. The child node of claim 1, wherein the memory and the one or more processors are further configured to:
receive a paging message indicating a change to the intended TDD configuration; and
determine the symbol to use based at least in part on receiving the paging message; or
the child node of claim 1, wherein the message is received from a distributed unit, DU, in an integrated access and backhaul, IAB, network.

5. The child node of claim 1, wherein the serving or neighboring cell comprises a serving cell of the child node, and wherein the intended TDD configuration comprises at least one of a cell-specific TDD configuration, a dedicated TDD configuration, a slot format indication, SFI, or a combination thereof; and
wherein the symbol to use is determined based at least in part on the at least one of a cell-specific TDD configuration, a dedicated TDD configuration, an SFI, or a combination thereof.

6. A parent node (605) for wireless communication, comprising:
a memory; and one or more processors coupled to the memory, the memory and the one or more processors configured to:
generate a message to include an indication of an intended time division duplex, TDD, configuration for the parent node, wherein the indication includes, for at least one slot used within the intended TDD configuration, downlink and uplink indicators of availability of symbols within the at least one slot; and
transmit the message including the indication of the intended TDD configuration for the parent node.

7. The parent node of claim 6, wherein the indication includes, for the at least one slot used within the intended TDD configuration, information indicating a quantity of downlink symbols and a quantity of uplink symbols; or
the parent node of claim 6, wherein the indication includes, for the at least one slot used within the intended TDD configuration, an implicit indicator of a quantity of flexible symbols.

8. The parent node of claim 6, wherein the memory and the one or more processors, to transmit the message, are configured to:
broadcast the message as a system information block, SIB, message;
wherein the SIB message is broadcast on an on demand basis.

9. The parent node of claim 6, wherein the memory and the one or more processors, to transmit the message, are configured to:
send the message as downlink control information, DCI.

10. The parent node of claim 9, wherein the DCI is a group-common DCI sent to a set of wireless devices including a child node; and
wherein the group-common DCI indicates a slot format indication, SFI, corresponding to the intended TDD configuration.

11. The parent node of claim 9, wherein the DCI is directed to one or more mobile termination, MT, nodes.

12. The parent node of claim 6, wherein the memory and the one or more processors are further configured to:
generate a paging message indicating a change to the intended TDD configuration; and
transmit the paging message indicating the change to the intended TDD configuration;
wherein the paging message is broadcast on an on demand basis or directed to one or more MT nodes; or
the parent node of claim 6, wherein the parent node is at least part of a serving cell, and wherein the intended TDD configuration comprises at least one of a cell-specific TDD configuration, a dedicated TDD configuration, a slot format indication, SFI, or a combination thereof.

13. A method (700) of wireless communication performed by a child node (610), comprising:
receiving (710) a message, from a serving or neighboring cell, that includes an indication of an intended time division duplex, TDD, configuration for the serving or neighboring cell, wherein the indication includes, for at least one slot used within the intended TDD configuration, downlink and uplink indicators of availability of symbols within the at least one slot; and
determining (720) a symbol to use within a TDD configuration for the child node, based at least in part on receiving the message.

14. A method (800) of wireless communication performed by a parent node (605), comprising:
generating (810) a message to include an indication of an intended time division duplex, TDD, configuration for the parent node, wherein the indication includes, for at least one slot used within the intended TDD configuration, downlink and uplink indicators of availability of symbols within the at least one slot; and
transmitting (820) the message including the indication of the intended TDD configuration for the parent node.

15. A computer program comprising instructions which when executed by a computer cause the computer to perform the method of any one of the claims 13-14.

## Patentansprüche

1. Ein untergeordneter Knoten (610) für drahtlose Kommunikation, umfassend:
einen Speicher; und einen oder mehrere Prozessoren, die mit dem Speicher gekoppelt sind, wobei der Speicher und der eine oder die mehreren Prozessoren konfiguriert sind zum:
Empfangen einer Nachricht von einer bedienenden oder benachbarten Zelle, die eine Anzeige einer beabsichtigten Zeitduplex-, TDD, Konfiguration für die bedienende oder benachbarte Zelle beinhaltet, wobei die Anzeige für mindestens einen Schlitz, der innerhalb der beabsichtigten TDD Konfiguration verwendet wird, Downlink- und Uplink-Indikatoren der Verfügbarkeit von Symbolen innerhalb des mindestens einen Schlitzes beinhaltet; und
Bestimmen eines Symbols, das innerhalb einer TDD Konfiguration für den untergeordneten Knoten zu verwenden ist, basierend mindestens teilweise auf dem Empfangen der Nachricht.

2. Der untergeordneter Knoten nach Anspruch 1, wobei Bestimmen des Symbols mindestens teilweise auf dem Verwalten von Interferenz zwischen der TDD Konfiguration für den untergeordneten Knoten und der beabsichtigten TDD Konfiguration für die bedienende oder benachbarte Zelle basiert; oder
der untergeordnete Knoten nach Anspruch 1, wobei die Anzeige für den mindestens einen Schlitz, der innerhalb der beabsichtigten TDD Konfiguration verwendet wird, Information beinhaltet, die eine Menge von Downlink-Symbolen und eine Menge von Uplink-Symbolen anzeigt; oder
der untergeordnete Knoten nach Anspruch 1, wobei die Anzeige für den mindestens einen Schlitz, der innerhalb der beabsichtigten TDD Konfiguration verwendet wird, einen impliziten Indikator einer Menge von flexiblen Symbolen beinhaltet.

3. Der untergeordnete Knoten nach Anspruch 1, wobei die Nachricht in einem Systeminformationsblock, SIB, enthalten ist; oder
der untergeordnete Knoten nach Anspruch 1, wobei die Nachricht in Downlink-Steuerinformation, DCI, enthalten ist;
wobei die DCI eine gruppengemeinsame DCI ist, die an einen Satz von drahtlosen Vorrichtungen, die den untergeordneten Knoten beinhalten, gesendet wird; und
wobei die gruppengemeinsame DCI eine Schlitzformatanzeige, SFI, anzeigt, die der beabsichtigten TDD Konfiguration entspricht.

4. Der untergeordnete Knoten nach Anspruch 1, wobei der Speicher und der eine oder die mehreren Prozessoren ferner konfiguriert sind zum:
Empfangen einer Paging-Nachricht, die eine Änderung der beabsichtigten TDD Konfiguration anzeigt; und
Bestimmen des Symbols, das zu verwenden ist, basierend mindestens teilweise auf dem Empfangen der Paging-Nachricht; oder
der untergeordnete Knoten nach Anspruch 1, wobei die Nachricht von einer verteilten Einheit, DU, in einem integrierten Access- und Backhaul, IAB, Netzwerk empfangen wird.

5. Der untergeordnete Knoten nach Anspruch 1, wobei die bedienende oder benachbarte Zelle eine bedienende Zelle des untergeordneten Knotens umfasst, und wobei die beabsichtigte TDD Konfiguration mindestens eine von einer zellspezifischen TDD Konfiguration, einer dedizierten TDD Konfiguration, einer Schlitzformatanzeige, SFI, oder einer Kombination davon umfasst; und
wobei das Symbol, das zu verwenden ist, bestimmt wird basierend mindestens teilweise auf der mindestens einen von einer zellspezifischen TDD Konfiguration, einer dedizierten TDD Konfiguration, einer SFI, oder einer Kombination davon.

6. Ein übergeordneter Knoten (605) für drahtlose Kommunikation, umfassend:
einen Speicher; und einen oder mehrere Prozessoren, die mit dem Speicher gekoppelt sind, wobei der Speicher und der eine oder die mehreren Prozessoren konfiguriert sind zum:
Erzeugen einer Nachricht, um eine Anzeige einer beabsichtigten Zeitduplex-, TDD, Konfiguration für den übergeordneten Knoten zu beinhalten, wobei die Anzeige für mindestens einen Schlitz, der innerhalb der beabsichtigten TDD Konfiguration verwendet wird, Downlink- und Uplink-Indikatoren der Verfügbarkeit von Symbolen innerhalb des mindestens einen Schlitzes beinhaltet; und
Übertragen der Nachricht, die die Anzeige der beabsichtigten TDD Konfiguration für den übergeordneten Knoten beinhaltet.

7. Der übergeordnete Knoten nach Anspruch 6, wobei die Anzeige für den mindestens einen Schlitz, der innerhalb der beabsichtigten TDD Konfiguration verwendet wird, Information beinhaltet, die eine Menge von Downlink-Symbolen und eine Menge von Uplink-Symbolen anzeigt; oder
der übergeordnete Knoten nach Anspruch 6, wobei die Anzeige für den mindestens einen Schlitz, der innerhalb der beabsichtigten TDD Konfiguration verwendet wird, einen impliziten Indikator einer Menge von flexiblen Symbolen beinhaltet.

8. Der übergeordnete Knoten nach Anspruch 6, wobei der Speicher und der eine oder die mehreren Prozessoren zum Übertragen der Nachricht konfiguriert sind zum:
Rundsenden der Nachricht als eine Systeminformationsblock, SIB, Nachricht;
wobei die SIB Nachricht auf einer On-Demand Basis rundgesendet wird.

9. Der übergeordnete Knoten nach Anspruch 6, wobei der Speicher und der eine oder die mehreren Prozessoren zum Übertragen der Nachricht konfiguriert sind zum:
Senden der Nachricht als Downlink-Steuerinformation, DCI.

10. Der übergeordnete Knoten nach Anspruch 9, wobei die DCI eine gruppengemeinsame DCI ist, die an einen Satz von drahtlosen Vorrichtungen, die einen untergeordneten Knoten beinhalten, gesendet wird; und
wobei die gruppengemeinsame DCI eine Schlitzformatanzeige, SFI, anzeigt, die der beabsichtigten TDD Konfiguration entspricht.

11. Der übergeordnete Knoten nach Anspruch 9, wobei die DCI an einen oder mehrere mobile Abschluss, MT, Knoten gerichtet ist.

12. Der übergeordnete Knoten nach Anspruch 6, wobei der Speicher und der eine oder die mehreren Prozessoren ferner konfiguriert sind zum:
Erzeugen einer Paging-Nachricht, die eine Änderung der beabsichtigten TDD Konfiguration anzeigt; und
Übertragen der Paging-Nachricht, die die Änderung der beabsichtigten TDD Konfiguration anzeigt;
wobei die Paging-Nachricht auf einer On-Demand Basis rundgesendet wird oder an einen oder mehrere MT Knoten gerichtet ist; oder
der übergeordnete Knoten nach Anspruch 6, wobei der übergeordnete Knoten mindestens Teil einer bedienenden Zelle ist, und wobei die beabsichtigte TDD Konfiguration mindestens eine von einer zellspezifischen TDD Konfiguration, einer dedizierten TDD Konfiguration, einer Schlitzformatanzeige, SFI, oder einer Kombination davon umfasst.

13. Ein Verfahren (700) für drahtlose Kommunikation, das von einem untergeordneten Knoten (610) durchgeführt wird, umfassend:
Empfangen (710) einer Nachricht von einer bedienenden oder benachbarten Zelle, die eine Anzeige einer beabsichtigten Zeitduplex-, TDD, Konfiguration für die bedienende oder benachbarte Zelle beinhaltet, wobei die Anzeige für mindestens einen Schlitz, der innerhalb der beabsichtigten TDD Konfiguration verwendet wird, Downlink- und Uplink-Indikatoren der Verfügbarkeit von Symbolen innerhalb des mindestens einen Schlitzes beinhaltet; und
Bestimmen (720) eines Symbols, das innerhalb einer TDD Konfiguration für den untergeordneten Knoten zu verwenden ist, basierend mindestens teilweise auf dem Empfangen der Nachricht.

14. Ein Verfahren (800) für drahtlose Kommunikation, das von einem übergeordneten Knoten (605) durchgeführt wird, umfassend:
Erzeugen (810) einer Nachricht, um eine Anzeige einer beabsichtigten Zeitduplex-, TDD, Konfiguration für den übergeordneten Knoten zu beinhalten, wobei die Anzeige für mindestens einen Schlitz, der innerhalb der beabsichtigten TDD Konfiguration verwendet wird, Downlink- und Uplink-Indikatoren der Verfügbarkeit von Symbolen innerhalb des mindestens einen Schlitzes beinhaltet; und
Übertragen (820) der Nachricht, die die Anzeige der beabsichtigten TDD Konfiguration für den übergeordneten Knoten beinhaltet.

15. Ein Computerprogramm, das Anweisungen umfasst, die, wenn sie von einem Computer ausgeführt werden, den Computer veranlassen, das Verfahren nach einem der Ansprüche 13-14 durchzuführen.

## Revendications

1. Un nœud enfant (110) pour la communication sans fil, comprenant :
une mémoire ; et un ou plusieurs processeurs couplés à la mémoire, la mémoire et les un ou plusieurs processeurs étant configurés pour :
recevoir un message, provenant d'une cellule de desserte ou voisine, qui inclut une indication d'une configuration de duplex par répartition dans le temps, TDD, prévue pour la cellule de desserte ou voisine, dans lequel l'indication inclut, pour au moins un slot utilisé dans la configuration TDD prévue, des indicateurs de liaison descendante et de liaison montante de disponibilité de symboles à l'intérieur de l'au moins un slot ; et
déterminer un symbole à utiliser dans une configuration TDD pour le nœud enfant, sur la base au moins en partie de la réception du message.

2. Le nœud enfant selon la revendication 1, dans lequel la détermination du symbole est basée au moins en partie sur la gestion d'interférences entre la configuration TDD pour le nœud enfant et la configuration TDD prévue pour la cellule de desserte ou voisine ; ou
le nœud enfant selon la revendication 1, dans lequel l'indication inclut, pour l'au moins un slot utilisé dans la configuration TDD prévue, des informations indiquant une quantité de symboles de liaison descendante et une quantité de symboles de liaison montante ; ou
le nœud enfant selon la revendication 1, dans lequel l'indication inclut, pour l'au moins un slot utilisé dans la configuration TDD prévue, un indicateur implicite d'une quantité de symboles flexibles.

3. Le nœud enfant selon la revendication 1, dans lequel le message est inclus dans un bloc d'informations système, SIB ; ou
le nœud enfant selon la revendication 1, dans lequel le message est inclus dans une information de contrôle de liaison descendante, DCI ;
dans lequel la DCI est une DCI commune à un groupe envoyé à un ensemble de dispositifs sans fil incluant le nœud enfant ; et
dans lequel la DCI commune à un groupe indique une indication de format de slot, SFI, correspondant à la configuration TDD prévue.

4. Le nœud enfant selon la revendication 1, dans lequel la mémoire et les un ou plusieurs processeurs sont en outre configurés pour :
recevoir un message de paging indiquant une modification de la configuration TDD prévue ; et
déterminer le symbole à utiliser sur la base au moins en partie de la réception du message de paging ; ou
le nœud enfant selon la revendication 1, dans lequel le message est reçu à partir d'une unité distribuée, DU, dans un réseau intégré d'accès et de backhaul, IAB.

5. Le nœud enfant selon la revendication 1, dans lequel la cellule de desserte ou voisine comprend une cellule de desserte du nœud enfant, et dans lequel la configuration TDD prévue comprend au moins l'une parmi une configuration TDD spécifique à une cellule, une configuration TDD dédiée, une indication de format de slot, SFI, ou une combinaison de celles-ci ; et
dans lequel le symbole à utiliser est déterminé au moins en partie sur la base de l'au moins une parmi une configuration TDD spécifique à une cellule, une configuration TDD dédiée, une SFI, ou une combinaison de celles-ci.

6. Un nœud parent (605) pour la communication sans fil, comprenant :
une mémoire ; et un ou plusieurs processeurs couplés à la mémoire, la mémoire et les un ou plusieurs processeurs étant configurés pour :
générer un message pour inclure une indication d'une configuration de duplex par répartition dans le temps, TDD, prévue pour le nœud parent, dans lequel l'indication inclut, pour au moins un slot utilisé dans la configuration TDD prévue, des indicateurs de liaison descendante et de liaison montante de disponibilité de symboles à l'intérieur de l'au moins un slot ; et
transmettre le message incluant l'indication de la configuration TDD prévue pour le nœud parent.

7. Le nœud parent selon la revendication 6, dans lequel l'indication inclut, pour l'au moins un slot utilisé dans la configuration TDD prévue, des informations indiquant une quantité de symboles de liaison descendante et une quantité de symboles de liaison montante ; ou
le nœud parent selon la revendication 6, dans lequel l'indication inclut, pour l'au moins un slot utilisé dans la configuration TDD prévue, un indicateur implicite d'une quantité de symboles flexibles.

8. Le nœud parent selon la revendication 6, dans lequel la mémoire et les un ou plusieurs processeurs, pour transmettre le message, sont en outre configurés pour :
la diffusion par broadcast du message sous forme de message de bloc d'information système, SIB ;
dans lequel le message SIB est diffusé par broadcast sur une base à la demande.

9. Le nœud parent selon la revendication 6, dans lequel la mémoire et les un ou plusieurs processeurs, pour transmettre le message, sont en outre configurés pour :
envoyer le message sous forme d'information de contrôle de liaison descendante, DCI.

10. Le nœud parent selon la revendication 9, dans lequel la DCI est une DCI commune à un groupe envoyé à un ensemble de dispositifs sans fil incluant un nœud enfant ; et
dans lequel la DCI commune à un groupe indique une indication de format de slot, SFI, correspondant à la configuration TDD prévue.

11. Le nœud parent selon la revendication 9, dans lequel la DCI est dirigée vers un ou plusieurs nœuds de terminaison mobile, MT.

12. Le nœud sans fil selon la revendication 6, dans lequel la mémoire et les un ou plusieurs processeurs sont en outre configurés pour :
générer un message de paging indiquant une modification de la configuration TDD prévue ; et
transmettre le message de paging indiquant la modification de la configuration TDD prévue ;
dans lequel le message de paging est diffusé par broadcast sur une base à la demande ou dirigé vers un ou plusieurs nœuds MT ; ou
le nœud parent selon la revendication 6, dans lequel le nœud parent fait au moins partie d'une cellule de desserte, et dans lequel la configuration TDD prévue comprend au moins l'une parmi une configuration TDD spécifique à une cellule, une configuration TDD dédiée, une indication de format de slot, SFI, ou une combinaison de celles-ci.

13. Un procédé (700) de communication sans fil réalisé par un nœud enfant (610), comprenant :
la réception d'un message, provenant d'une cellule de desserte ou voisine, qui inclut une indication d'une configuration de duplex par répartition dans le temps, TDD, prévue pour la cellule de desserte ou voisine, dans lequel l'indication inclut, pour au moins un slot utilisé dans la configuration TDD prévue, des indicateurs de liaison descendante et de liaison montante de disponibilité de symboles à l'intérieur de l'au moins un slot ; et
la détermination (720) d'un symbole à utiliser dans une configuration TDD pour le nœud enfant, sur la base au moins en partie de la réception du message.

14. Un procédé (800) de communication sans fil réalisé par un nœud parent (605), comprenant :
la génération (810) d'un message pour inclure une indication d'une configuration de duplex par répartition dans le temps, TDD, prévue pour le nœud parent, dans lequel l'indication inclut, pour au moins un slot utilisé dans la configuration TDD prévue, des indicateurs de liaison descendante et de liaison montante de disponibilité de symboles à l'intérieur de l'au moins un slot ; et
la transmission (820) du message incluant l'indication de la configuration TDD prévue pour le nœud parent.

15. Un programme de calculateur comprenant des instructions qui, lorsqu'elles sont exécutées par un calculateur, amènent le calculateur à réaliser le procédé selon l'une des revendications 13 à 14.
